# EUROPEAN PATENT SPECIFICATION

(11) **EP 4 335 879 B1**
(45) Date of publication and mention of the grant of the patent: **29.01.2025**
(21) Application number: 23192665.0
(22) Date of filing: 22.08.2023
(51) Int. Cl.: C08F 6/00, C08F 220/44, D01F 6/38, D01F 9/22, C08F 120/44, C08J 11/02, D01F 13/04

(54) **PROCESS FOR THE RECOVERY AND RECYCLING OF UNREACTED MONOMER IN A SINGLE-STEP PROCESS FOR THE PRODUCTION OF A CARBON-FIBER PRECURSOR**
VERFAHREN ZUR RÜCKGEWINNUNG UND RÜCKFÜHRUNG VON NICHT UMGESETZTEM MONOMER IN EINEM EINSTUFIGEN VERFAHREN ZUR HERSTELLUNG EINES KOHLEFASERVORLÄUFERS
PROCÉDÉ DE RÉCUPÉRATION ET DE RECYCLAGE DE MONOMÈRE N'AYANT PAS RÉAGI DANS UN PROCÉDÉ EN UNE SEULE ÉTAPE POUR LA PRODUCTION D'UN PRÉCURSEUR DE FIBRE DE CARBONE

(30) Priority: 24.08.2022 IT 202200017541
(43) Date of publication of application: 13.03.2024
(73) Proprietor: Montefibre Mae Technologies S.R.L., 20145 Milano (IT)
(72) Inventor: BARETTER, Paolo, I-35137 Padova (PD) (IT); CORREIA, Paulo, 2830-095 Barreiro (PT); FRANCALANCI, Franco, I-51010 Uzzano (PT) (IT); REIA, Ivo, 2845-568 Amora (PT); VIDIGAL, Ana Paula, 1600-759 Lisbon (PT)
(74) Representative: De Gregori, Antonella

(56) References cited:
- CN-A- 106 317 296
- JP-A- 2006 241 648

## Description

The present invention relates to a process for the recovery and recycling of unreacted monomer in a one-step process for the production of a carbon-fiber precursor.

The present invention also relates to an integrated and improved single-step process for the production of a carbon-fiber precursor which starts from the comonomers and reaches the spinning step obtaining the final precursor fiber, which provides for the recovery of the unreacted monomers at the end of the polymerization step and their recycling to the polymerization process itself.

The present invention falls within the sector relating to the production of precursor fibers which provides for the preparation of polymers starting from acrylonitrile or copolymers mainly composed of acrylonitrile (95-99.5% by weight with respect to the total weight of the polymer) and one or more comonomers in a quantity generally ranging from 0.5 to 5% by weight with respect to the total weight of the polymer.

The preferred comonomers are vinyl molecules bearing one or more acid groups such as acrylic acid, methacrylic acid, itaconic acid, sulfonated styrenes and analogues and optionally neutral vinyl molecules such as methyl acrylate, methyl methacrylate, vinyl acetate, acrylamide and analogues.

The polymers and copolymers thus prepared are then subjected to spinning to produce precursor fibers in the form of tows which are collected on bobbins or in boxes.

The carbon fibers are then obtained by means of appropriate heat treatment of these polyacrylonitrile-based "precursor" fibers.

There are various industrial processes for the preparation of acrylic fibers, which use different polymerization and spinning methods.

The state of the art can be divided and schematized as follows

### A. Discontinuous processes (two-step).

In two-step processes, the polymer is generally produced in aqueous suspension, isolated by filtration and drying and subsequently dissolved in a suitable solvent to be spun and transformed into fiber or precursor fiber in the case of carbon fiber. The solvents most commonly used for the preparation of the spinning solution (dope) are: dimethylacetamide (DMAC), dimethylformamide (DMF), an aqueous solution of sodium thiocyanate (NaSCN) and finally, as recently described in patent EP2894243B1, mixtures of dimethyl sulfoxide (DMSO) with variable quantities of water.

### B. Continuous Processes (one-step)

In continuous processes, on the other hand, the polymerization takes place in a solvent and the solution thus obtained is directly used in spinning without the intermediate isolation of the polymer. The polymerization solvents most commonly used in these processes are: dimethylformamide (DMF), dimethylsulfoxide (DMSO), aqueous solution of zinc chloride (ZnCl₂) and aqueous solution of sodium thiocyanate (NaSCN).

Whereas discontinuous processes have advantages from a management point of view, mainly for large-sized plants as the two polymerization and spinning steps are independent, single-step processes are generally preferred when high-performance carbon fibers are desired.

In both types of process, the polymerization reaction is carried out up to a conversion of Acrylonitrile generally ranging from 80 to 95% in order to optimize the overall efficiency of the process. It is in fact known to skilled persons in the field that the reaction rate decreases as the conversion increases with an asymptotic trend, so very lengthy times would be necessary for reaching the complete conversion of the monomer fed.

This partial conversion of the monomer does not represent a problem in the case of two-step processes with polymerization in aqueous suspension as the unreacted monomer can be easily recovered and recycled from the aqueous reaction mixture at the end of the reaction by means of a simple stripping operation. The quantity of residual Acrylonitrile in the polymer is very low, in the order of a few ppm, and does not represent a problem in the continuation of the precursor production process.

In single-step processes, on the contrary, whether conducted batchwise or in continuous mode, there is the difficulty of removing the unreacted volatile monomer or co-monomers from the polymer solution (dope) before feeding it to the subsequent filtration and spinning steps. This is because the unreacted monomer or co-monomers are dissolved in a very viscous medium (dope) from which it is difficult to completely remove them by evaporation or other physical treatments. Existing processes efficiently remove most of the unreacted acrylonitrile by means, for example, of a thin-film evaporator (TFE) or stripping column. It is not possible, however, to effect its complete removal, unless by evaporating large volumes of solvent. It is in fact problematic to produce a good dope for spinning with a residual acrylonitrile content of less than 1,000 ppm (0.1%). An acrylonitrile content higher than this limit requires particular precautions during the subsequent processing steps due to the carcinogenic nature of acrylonitrile.

A technological limitation to the use of these "demonomerization" technologies, especially on a large scale, also derives from the difficulty of condensing the unreacted monomer in an efficient and industrially economical way.

Equipment operating under vacuum must in fact be used in order to facilitate the removal of the monomer from its solution, a complex operation in view of the high viscosity of the solution and the limited thermal stability of the DMSO solvent. Operating pressures in the order of 10-25 mbar and temperatures of about 60-80°C are generally adopted.

Under these temperature and pressure conditions, the low-boiling monomer (70-80°C) cannot be condensed or recovered using a simple "scrubber" and it is necessary to resort to absorption systems in a suitable solvent, generally using the same solvent already present in the starting solution (DMSO). These systems typically consist of absorption columns that remove monomers with fresh solvent. The equipment is expensive and large-sized, which mobilizes large quantities of solvent, thus creating a limit to the overall size of the plant except in the case of multiple installations, with a consequent further increase in costs.

Furthermore, the volatile monomer or co-monomers thus recovered cannot generally be re-used in the polymerization itself as they have a detrimental effect on the polymerization kinetics and on the quality of the polymer solution thus produced. Various reasons have been given for this failure to re-use the unreacted monomer, which has a major impact on the overall cost-effectiveness of the precursor and ultimately carbon-fiber production process.

Among the causes of the non-reuse of the recovered monomer are the presence of oligomers or decomposition products mixed with the recovered monomer and the presence of gelation nuclei which can compromise the efficiency of the polymerization reactor or spinning process. JP 2011063553A and JP 2013199518A, for example, indicate that a major problem associated with the re-use of unreacted acrylonitrile in solution polymerization is fouling of the equipment, deriving from uncontrolled polymerization of unreacted monomer and decomposition products of the AIBN initiator (2-2'-azobisisobutyronitrile).

This fouling accumulates and causes encrustment in the equipment making it necessary to increase the number and duration of the cleaning cycles of the equipment.

JP 2000336115A specifies that, when gels are generated in the reaction mixture, they cause clogging of equipment such as pipes and valves, filter means and spinnerets. Furthermore, microgels pass through filters and spinnerets and cause filament breakage in the stretching process during the spinning of the fibers.

The problem associated with the presence of small quantities of water, always present in the recovered monomer, is also significant: when the recovered monomer is fed directly to the reactor, these small quantities of water cause a constant enrichment in water of the reaction mixture fed to the reactor itself also favouring the formation of gels.

Various approaches have been proposed for overcoming these problems, which involve sending the mixture to a multistep distillation system (as described in KR102142550B1, KR20190079832A, KR20190079833A and in EP3623028A1), distillation processes in the presence of solvents which can form azeotropic mixtures (such as the use of n-hexane and other azeotropic agents in KR102142550B1), the use of particular inhibitors (such as the use of cupferron in JP2011063553A, JP2013199518A and JP5682107B2) and the need for thorough and frequent washing of the polymerization reactor by cleaning chemicals (such as the use of an alkaline solution, for example NaOH or KOH), followed by neutralization with sulfamic acid and/or p-toluenesulfonic acid, proposed in JP6142502 and JP0153962. Finally, the use of a combination of a metal alcoholate, such as sodium methylate and magnesium ethylate, and a solvent containing a diamide compound, such as 1,3-dimethyl-2-imidazolidinone, proposed in JP6339907A and JP0725809). CN106317296 A teaches the recovery of acrylonitrile via three condensers in series in an acrylic fiber production process, however the use of a thin film evaporator is not mentioned.

JP 2006 241 648 A describes the removal of acrylonitrile rest monomer in a polyacrylonitrile fiber production process via several condensers. However, a thin film evaporator system annd specific temperature and pressure conditions are not discussed.

None of the methods proposed for the recovery and recycling of the unreacted monomer in the single-step process for the production of carbon-fiber precursors, however, has provided satisfactory results, such as to allow their application at an industrial level.

The present invention therefore relates to a process for the recovery and recycling of unreacted monomer in a single-step process for the production of a carbon-fiber precursor which overcomes the above-mentioned limitations and disadvantages of the prior art and which allows significant advantages to be obtained in terms of product quality and production costs.

### Detailed description of the invention

The present invention relates to a process for the recovery and recycling of unreacted monomer in a single-step process for the production of a carbon-fiber precursor comprising the following steps:
(a) discharging a reaction mixture comprising acrylonitrile polymers or copolymers mainly consisting of acrylonitrile and one or more co-monomers selected from vinyl molecules bearing one or more acid groups and optionally neutral vinyl molecules, water, polymerization solvent, unreacted monomers and possible reaction by-products, from a polymerization reactor into a tank kept at a temperature ranging from 35°C to 60°C in order to slow down or stop the polymerization reaction;
(b) feeding the mixture from step (a) to a thin-film evaporation system (TFE) operating at a temperature ranging from 40°C to 80°C and at a pressure ranging from 10 to 30 mbar abs:
(c) collecting a mixture of acrylonitrile, water and polymerization solvent from the head of the TFE;
(d) feeding the mixture of acrylonitrile, water and polymerization solvent, collected from the head of the TFE in step c) at a temperature ranging from 60°C to 85°C, preferably 70-80°C, and at a pressure ranging from 10 to 30 mbar, preferably 15-25 mbar, to a first condenser cooled to a temperature of 30-45°C, preferably 36-42°C, obtaining a first liquid phase and a first vapour phase;
(e) feeding the first vapour phase, exiting from said first condenser, to a second condenser cooled to a temperature of 12-25°C, preferably 12-20°C, obtaining a second liquid phase and a second vapour phase;
(f) feeding the second vapour phase, exiting from said second condenser, to a third condenser cooled to a temperature ranging from -10 to 10°C, preferably from -5 to 0°C, obtaining a third liquid phase and a third vapour phase
(g) combining the three liquid phases obtained in the previous steps d)-f), obtaining a fourth liquid phase comprising the polymerization solvent in a quantity ranging from 70 to 75% by weight, acrylonitrile in a quantity ranging from 24 to 29% by weight and water in a quantity equal to about 1% by weight, said percentages being indicated with respect to the total weight of the fourth liquid phase, said fourth liquid phase being then fed to a distillation column operating under vacuum at a pressure ranging from 300 to 500 mbar and kept at a temperature of 160°C or less;
(h) collecting a fourth vapour phase from the head of the distillation column, which is fed to a purification column operating at reduced pressure ranging from 400 to 600 mbar and kept at a temperature of less than 70°C and recovering pure acrylonitrile from the bottom of the distillation column, which is recycled to the polymerization reactor.

In a particular embodiment, the recovery and recycling process of the unreacted monomer according to the present invention is perfectly integrated in a process for the production of a carbon-fiber precursor comprising the following steps:
i) preparing an ammonium salt solution of an acid comonomer selected from itaconic acid, methacrylic acid or acrylic acid, by dissolution of said acid co-monomer in water containing at least a quantity of ammonia equal to at least 50% of the stoichiometric quantity of ammonia with respect to the acid groups present, wherein the concentration of acid comonomer in water varies within the range of 3% to 50% by weight, preferably from 5 to 30% by weight, with respect to the total weight of the aqueous solution;
ii) feeding acrylonitrile or a mixture of acrylonitrile and a neutral vinyl comonomer into the reactor, the acrylonitrile/neutral vinyl comonomer being present in a weight ratio ranging from 95:5 to 99:1, the aqueous solution of ammonium salt of the acid comonomer prepared in step i), the polymerization solvent, a radical initiator, such as, for example, 2-2'-azobisisobutyronitrile (AIBN) and a chain-transfer agent, such as, for example, dodecylmercaptan or octylmercaptan, wherein said acrylonitrile is partly unreacted acrylonitrile, purified, recovered and recycled according to steps a-h) of the process for the recovery and recycling of unreacted monomer according to the present invention;
iii) keeping the mixture thus obtained under stirring at a temperature ranging from 60°C to 80°C, for a time ranging from 10 to 20 hours, preferably from 12 to 15 hours;
iv) discharging the contents of the reactor according to step (a) of said process for the recovery and recycling of unreacted monomer according to the present invention;
v) feeding the mixture thus obtained to a thin-film evaporation system (TFE) operating at a temperature ranging from 40 to 80°C, and at a pressure ranging from 10 to 30 mbar abs according to step (b) of said process for the recovery and recycling of unreacted monomer according to the present invention;
vi) collecting a mixture of acrylonitrile, water and polymerization solvent from the head of the TFE, said mixture being sent to step (c) of said process for the recovery and recycling of unreacted monomer according to the present invention;
vii) collecting a polymer solution in polymerization solvent from the bottom of the TFE, said solution being optionally diluted with fresh polymerization solvent to reach a concentration ranging from 15 to 25% by weight, preferably from 18 to 22% by weight, with respect to the total weight of the solution, obtaining a homogeneous spinning solution;
viii) feeding the homogeneous spinning solution obtained at the end of step vii) to a spinning step or to a storage tank.

The spinning solution or dope, obtained at the end of step vii), can be used immediately for feeding a suitable spinning line or it can be stored in heated tanks. The solution is sent to a battery of filter presses, with selectivity cloths from 40 µm to 5 µm for the removal of any particles and, subsequently, to the spinning line. The spinning step is carried out by means of a wet-spinning process or dry-jet wet spinning process wherein, after the coagulation phase in a coagulation bath consisting of a mixture of water and solvent, the bundle of filaments thus obtained is stretched and washed in succession up to a length of approximately 10 times the initial length and then subjected to a final washing step with water to remove the last traces of solvent.

In step i) for preparing the ammonium salt solution of the acid comonomer, the concentration of acid comonomer in water preferably ranges from 3% to 50% by weight, preferably from 5 to 30% by weight with respect to the total weight of the aqueous solution.

In step i) a neutral vinyl comonomer selected from methyl acrylate or vinyl acetate can also be present.

In the feeding step ii) to the reactor, 90-150 parts by weight, more preferably 100 parts by weight, of acrylonitrile or a mixture of acrylonitrile and a neutral vinyl comonomer, acrylonitrile/neutral vinyl comonomer being present in a weight ratio ranging from 95:5 to 99:1, 2-15 parts by weight, more preferably 10 parts by weight, of ammonium salt aqueous solution of the acid comonomer prepared in step i), 300-500 parts by weight of polymerization solvent, preferably DMSO, 0.2-0.5 parts by weight of 2-2'-azobisisobutyronitrile AIBN and 0.05-0.15 parts by weight of dodecyl mercaptan or octyl mercaptan, are preferably fed.

The dodecyl mercaptan or octyl mercaptan acts as a molecular-weight regulator.

The polymerization solvent is selected from dimethylformamide (DMF), dimethyl sulfoxide (DMSO), aqueous solution of zinc chloride (ZnCl₂) and aqueous solution of sodium thiocyanate (NaSCN), and is preferably DMSO, optionally in the presence of water.

Total weight of the mass charged into the reactor refers to the total weight of the components fed to the reactor in step ii) of the process according to the present invention.

Said acrylonitrile fed to the reactor is partly unreacted, purified and recovered acrylonitrile as described in steps a-h) of said recovery and recycling process of the unreacted monomer according to the present invention.

The quantity of acrylonitrile recovered and recycled in step ii) ranges from 5 to 15% by weight with respect to the total weight of acrylonitrile fed to the reactor.

In step iii) for keeping the mixture obtained in step ii) under stirring, the temperature can preferably range from 65 to 75°C, for a time ranging from 10 to 20 hours, preferably from 12 to 15 hours.

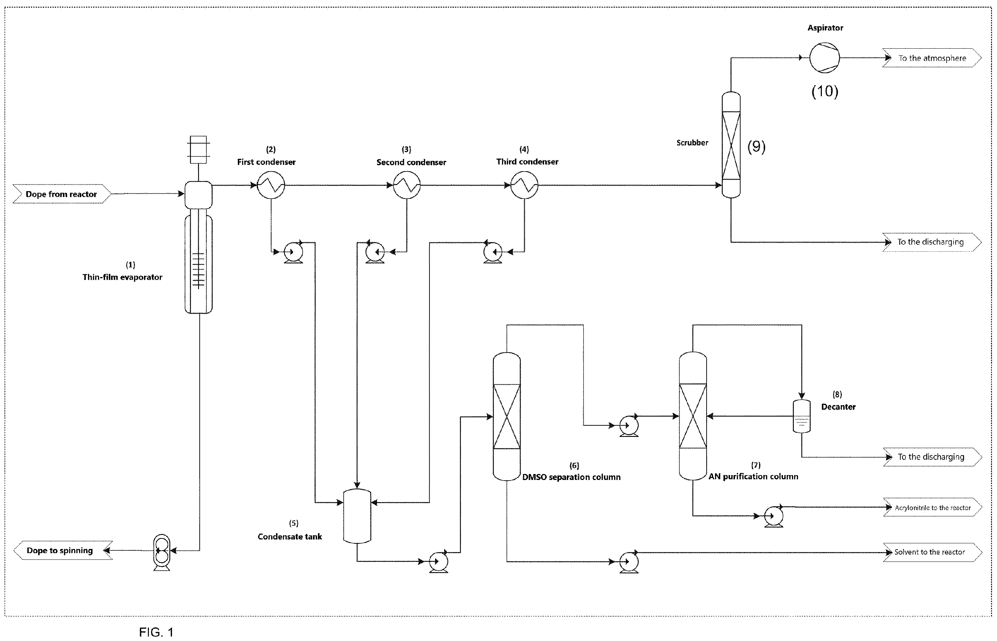

The process for the recovery and recycling of unreacted monomer in a single-step process for the production of a carbon-fiber precursor according to the present invention is described in detail with reference to the attached Figure 1 .

Figure 1 is in fact a schematic representation of steps a)-h) of the recovery and recycling process of unreacted monomer in a single-step process for the production of a carbon fiber precursor according to the present invention.

The reaction mixture leaving the polymerization reactor, not shown in Figure 1, is discharged into a tank, not shown in Figure 1, kept at a temperature ranging from 35 to 60°C as described in step a) of the process according to the present invention and then fed to a thin-film evaporator (TFE) (1), kept at a temperature of 60-85°C, preferably 70-80°C, and at a pressure of 10-30 mbar, preferably 15- 25 mbar, as indicated in step b) of the process according to the present invention.

At the end of step b), the mixture leaving the TFE head (1), under these pressure and temperature conditions, is collected and fed according to steps c) and d) to a first condenser (2), cooled by cooling water to a temperature of 30-45°C, preferably 36-42°C, which produces a first liquid phase rich in polymerization solvent, preferably DMSO and containing small quantities of water (about 1-2% by weight) and acrylonitrile (about 4-6% by weight) and a first vapour phase. The percentages by weight refer to the total weight of the first liquid phase.

The first vapour phase leaving the first condenser (2) is fed according to step e) of the process according to the present invention to a second condenser (3) cooled with chilled water to a temperature of 12-25°C, preferably 12-20°C, which produces a second liquid phase, again rich in polymerization solvent, preferably DMSO, but with larger quantities of water (about 2-4% by weight) and Acrylonitrile (about 10-20% by weight), and a second vapour phase . The percentages by weight refer to the total weight of the second liquid phase.

In step f) of the process according to the present invention the second vapour phase leaving the second condenser (3) is fed to a third condenser (4) cooled with a cooling mixture to a temperature ranging from -10 to 10°C, preferably from -5 to 0°C which produces a third liquid phase again containing polymerization solvent, preferably DMSO, small quantities of water (about 1-5% by weight) and rich in Acrylonitrile (about 95-99% by weight), and a third vapour phase. The percentages by weight refer to the total weight of the third liquid phase.

The third vapour phase leaving the third condenser (4) is very rich in Acrylonitrile (about 90% by weight with respect to the total weight of the vapour phase), but represents only a very small fraction of the Acrylonitrile initially present (< 0.5% by weight) and is rejected from the process through a scrubber (9) which eliminates the last traces of acrylonitrile and an empty group (10) with final emission into the atmosphere.

The three liquid phases obtained from the three condensers (2, 3 and 4) are collected in a single tank (5) as described in step g) of the process according to the present invention. The liquid phase thus obtained is approximately composed of 70-75% by weight of polymerization solvent, preferably DMSO, 24-29% by weight of Acrylonitrile and 1% by weight of water. The percentages by weight refer to the total weight of the liquid phase. This liquid phase is fed to a distillation column (6) operating under vacuum at a pressure ranging from 300 to 500 mbar and kept at a temperature lower than or equal to 160°C.

The pure polymerization solvent, preferably DMSO, is collected from the bottom of the distillation column (6) and is re-used in the process. As indicated in step h) of the process according to the present invention, a flow of steam is collected from the top of the distillation column (6), mainly containing water and Acrylonitrile, which is fed to a purification column (7), operating at reduced pressure, ranging from 400 to 600 mbar and kept at a temperature lower than 70°C.

Pure acrylonitrile is recovered from the bottom of the purification column (7), which is directly recycled to the polymerization reactor. A water/acrylonitrile azeotrope is collected from the head of the purification column (7), from which the aqueous phase is eliminated, whereas the organic phase is recycled continuously to the purification column (7), by means of the decanter (8).

The process for the recovery and recycling of unreacted monomer in a single-step process for the production of a carbon-fiber precursor according to the present invention allows an almost total use of acrylonitrile to be obtained with the relative environmental and economic advantages. The recovery and recycling of the unreacted acrylonitrile with the process according to the present invention is equal to about 99% of that fed to the polymerization reactor.

A further advantage of the process object of the present invention is the possibility of using fresh acrylonitrile containing even small quantities of water (approximately 0.5% by weight) without proceeding with its purification, as the water contained therein is eliminated in the recovery and recycling process of the unreacted monomer and there is therefore no accumulation of water in the subsequent polymerization cycles.

Furthermore, the process for the recovery and recycling of unreacted monomer in a single-step process for the production of a carbon-fiber precursor allows a solution of acrylonitrile copolymers to be obtained, which are free from gels and without the formation of insoluble agglomerates, increasing the advantages associated with solution polymerization.

In the present description, the term polymer also refers to copolymers obtained starting from acrylonitrile and one or more other comonomers (acrylonitrile in a quantity ranging from 95 to 99.5% by weight with respect to the total weight of the polymer and one or more other co-monomers in a quantity generally ranging from 0.5 to 5% by weight with respect to the total weight of the polymer).

The preferred comonomers are molecules bearing one or more acid groups such as acrylic acid, itaconic acid, sulfonated styrenes and analogues and optionally neutral vinyl molecules such as methyl acrylate, methyl methyl acrylate, vinyl acetate, acrylamide and analogues.

In particular, the polymers are high-molecular-weight polymers, with a number average molecular weight ranging from 100,000 to 300,000 Da.

The preferred solvent is dimethyl sulfoxide (DMSO), selected for its characteristics of low environmental impact and limited toxicity.

The spinning solution or dope, obtained at the end of step vii), can be used immediately for feeding a suitable spinning line or it can be stored in heated tanks. The solution is sent to a battery of filter presses, with selectivity cloths from 40 µm to 5 µm for the removal of any particles and, subsequently, to the spinning line.

The spinning line used can be of the wet-spinning type with spinnerets immersed in a coagulation bath consisting of a mixture of water and solvent. After coagulation, the bundle of filaments thus obtained is stretched and washed in succession up to a length of about 10 times the initial length and then subjected to a final washing step with water to remove the last traces of solvent according to the known technique for producing tows which are collected on bobbins or in boxes and then sent to the carbonization line for the production of carbon fiber.

Alternatively, the spinning line used can be of the dry-jet wet spinning (air-gap spinning) type with spinnerets kept in the air at a short distance from the surface of the coagulation bath consisting of a mixture of water and solvent. After coagulation, the bundle of filaments is stretched and washed in succession up to a length of about 10 times the initial length and then subjected to a final washing step with water to remove the last traces of solvent according to the prior art, to produce tows which are collected on bobbins or in boxes and then sent to the carbonization line for the production of carbon fiber.

### Examples

Some implementation examples of the process according to the present invention are provided hereunder for illustrative and non-limiting purposes of the present invention

### Example 1

99 kg of Acrylonitrile, 400 kg of DMSO, 0.1 kg of n-octyl mercaptan and 15 kg of an aqueous solution containing 1 kg of itaconic acid, 0.25 kg of ammonia and 13.75 kg of water were charged at room temperature into a stainless steel reactor equipped with a stirrer and a cooling jacket. The solution thus obtained was heated to a temperature of 65°C and 0.3 kg of 2,2'-azobisisobutyronitrile (AIBN) were added. The reaction heat was removed by circulating cold water in the cooling jacket of the reactor and the solution was kept under stirring for 7 hours at 65°C; the temperature was subsequently increased to 72°C and the system kept under stirring for a further 7 hours. Under the conditions indicated, a conversion of the acrylonitrile fed equal to 90.4% was obtained.

At the end of the above-mentioned period of time, the contents of the reactor were discharged into a tank kept at a temperature of 35°C and subsequently fed to a thin-film evaporator (TFE) kept at a temperature of 80°C and with a residual pressure of 22 mbar.

A mixture containing Acrylonitrile, water and DMSO was collected from the head of the TFE and fed to a series of three condensers cooled to temperatures of 42°C, 20°C and -10°C, respectively. The three condensed liquid phases of the three condensers were combined and sent to a single tank. The composition by weight of the mixture collected in this tank is as follows: DMSO: 72%; acrylonitrile: 27% and water: 1% (by weight with respect to the total weight of the mixture). The mixture was fed to a distillation column kept at a pressure of 350 mbar and at a temperature of 155°C.

Pure DMSO was recovered from the bottom of this column and re-used in the subsequent polymerization steps. A flow of steam was obtained from the head of the distillation column, which was fed to a purification column kept at a pressure of 520 mbar and at a temperature of 68°C. A water/acrylonitrile azeotrope was recovered from the top of the purification column, from which the water was removed by means of a decanter and sent for wastewater treatment. Pure acrylonitrile was recovered from the bottom of the purification column, which was recycled directly into the polymerization reactor. 9.3 kg of acrylonitrile equal to 97.8% of the unreacted fraction of acrylonitrile were recycled to the reactor.

A homogeneous co-polymer solution was collected from the bottom of the TFE, having a viscosity of 450 Poise at 60°C and containing a residual quantity of Acrylonitrile equal to 0.05% by weight.

The dope thus produced was fed to a wet-spinning line with 24,000-hole spinnerets immersed in a coagulation bath containing 60% by weight of DMSO and 40% by weight of water and kept at 55°C. The bundle of filaments thus obtained was stretched, in succession, 10 times its initial length and washed. At the end of the stretching and washing section, the tow was collected on bobbins at a rate of 70 m/min, obtaining bobbins of 24 K precursor having the following characteristics:
- Titer: 1.22 dtex;
- Breaking strength: 59.5 cN/tex:
- Ultimate elongation: 14.5%;
suitable for the production of carbon fiber.

### Example 2

99.5 kg of Acrylonitrile, 400 kg of DMSO, 0.1 kg of dodecyl mercaptan and 10 kg of an aqueous solution containing 0.5 kg of Itaconic Acid, 0.100 kg of ammonia and 9.40 kg of water were charged at room temperature into a stainless steel reactor equipped with a stirrer and a cooling jacket. The solution thus obtained was heated to a temperature of 65°C and 0.3 kg of 2,2'-azobisisobutyronitrile (AIBN) were added. The reaction heat was removed by circulating cold water in the cooling jacket of the reactor and the solution kept under stirring for 10 hours at 65°C; the temperature was subsequently increased to 70°C and the system kept under stirring for a further 12 hours. Under the conditions indicated, a conversion of the acrylonitrile fed equal to 92.8% was obtained.

At the end of the above-mentioned period, the contents of the reactor were discharged into a tank kept at a temperature of 35°C and subsequently fed to a thin-film evaporator (TFE) kept at a temperature of 80°C and with a residual pressure of 25 mbar.

A mixture containing Acrylonitrile, water and DMSO was collected from the head of the TFE and fed to a series of three condensers cooled to temperatures of 40°C, 20°C and -10°C, respectively. The three condensed liquid phases of the three condensers were combined and sent to a single tank. The composition by weight of the mixture collected in this tank is as follows: DMSO: 74%; acrylonitrile: 25% and water: 1% (by weight with respect to the total weight of the mixture). The mixture was fed to a distillation column kept at a pressure of 360 mbar and at a temperature of 158°C.

Pure DMSO was recovered from the bottom of this column and re-used in the subsequent polymerization steps. A flow of steam was obtained from the head of the distillation column, which was fed to a purification column kept at a pressure of 550 mbar and at a temperature of 70°C. A water/acrylonitrile azeotrope was recovered from the top of the purification column, from which the water was removed by means of a decanter and sent for wastewater treatment. Pure acrylonitrile was recovered from the bottom of the purification column, which was recycled directly into the polymerization reactor. 7.05 kg of acrylonitrile equal to 98.5% of the unreacted fraction of acrylonitrile were recycled to the reactor.

A homogeneous co-polymer solution was collected from the bottom of the TFE, having a viscosity of 420 Poise at 60°C and containing a residual quantity of Acrylonitrile equal to 0.05% by weight.

The dope thus produced was fed to a wet-spinning line with 48,000-hole spinnerets immersed in a coagulation bath containing 60% by weight of DMSO and 40% by weight of water and kept at 55°C. The bundle of filaments thus obtained was stretched, in succession, 10 times its initial length and washed. At the end of the stretching and washing section, the tow was collected by means of suitable crosslappers at a rate of 60 m/min obtaining boxes of 48 K precursor having the following characteristics:
- Titer: 1.25 dtex;
- Breaking strength: 56.2 cN/tex:
- Ultimate elongation: 13.6%;
suitable for the production of carbon fiber.

### Example 3

A spinning solution in DMSO was produced according to the methods described in Example 1, both with respect to the polymerization and the recovery and recycling of the unreacted acrylonitrile.

The dope thus produced was fed to a dry-jet wet spinning line with 3,000-hole spinnerets positioned at a distance of 4 mm from the surface of the coagulation bath containing 35% by weight of DMSO and 65% by weight of water at a temperature of 5°C. The bundle of filaments obtained after coagulation was stretched in water and subsequently in steam (steam stretching) nine times its initial length and finally washed to remove the solvent still present. At the end of the stretching and washing section, reels of 12K precursor were obtained by overlapping four 3K tows coming from the single spinneret. The fiber obtained, collected on bobbins at a rate of 240 m/min, has a perfectly round section, is compact, free of cracks and proves to have the following characteristics:
- Titer: 1.0 dtex;
- Breaking strength: 65.3 cN/tex:
- Ultimate elongation: 14.1%;
suitable for the production of carbon fiber.

## Claims

1. A process for the recovery and recycling of unreacted monomer in a single-step process for the production of a carbon-fiber precursor comprising the following steps:
(a) discharging a reaction mixture comprising acrylonitrile polymers or copolymers mainly consisting of acrylonitrile and one or more co-monomers selected from vinyl molecules bearing one or more acid groups and optionally neutral vinyl molecules, water, polymerization solvent, unreacted monomers and possible reaction by-products, from a polymerization reactor into a tank kept at a temperature ranging from 35°C to 60°C in order to slow down or stop the polymerization reaction;
(b) feeding the mixture deriving from step (a) to a thin-film evaporation system (TFE) operating at a temperature ranging from 40°C to 80°C and at a pressure ranging from 10 to 30 mbar abs:
(c) collecting a mixture of acrylonitrile, water and polymerization solvent from the head of the TFE;
(d) feeding the mixture of acrylonitrile, water and polymerization solvent, collected from the head of the TFE in step c) at a temperature ranging from 60°C to 85°C, preferably 70-80°C, and at a pressure ranging from 10 to 30 mbar, preferably 15-25 mbar, to a first condenser cooled to a temperature of 30-45°C, preferably 36-42°C, obtaining a first liquid phase and a first vapour phase;
(e) feeding the first vapour phase, exiting from said first condenser, to a second condenser cooled to a temperature of 12-25°C, preferably 12-20°C, obtaining a second liquid phase and a second vapour phase;
(f) feeding the second vapour phase, exiting from said second condenser, to a third condenser cooled to a temperature ranging from -10 to 10°C, preferably from -5 to 0°C, obtaining a third liquid phase and a third vapour phase
(g) combining the three liquid phases obtained in the previous steps d)-f), obtaining a fourth liquid phase comprising the polymerization solvent in a quantity ranging from 70 to 75% by weight, acrylonitrile in a quantity ranging from 24 to 29% by weight and water in a quantity equal to about 1% by weight, said percentages being indicated with respect to the total weight of the fourth liquid phase, said fourth liquid phase being then fed to a distillation column operating under vacuum at a pressure ranging from 300 to 500 mbar and kept at a temperature of 160°C or less;
(h) collecting a fourth vapour phase from the head of the distillation column, which is fed to a purification column operating at reduced pressure ranging from 400 to 600 mbar and kept at a temperature of less than 70°C and recovering pure acrylonitrile from the bottom of the distillation column, which is recycled to the polymerization reactor.

2. The process according to claim 1, wherein the single-step process for the production of a carbon-fiber precursor comprises the following steps:
i) preparing an ammonium salt solution of an acid comonomer selected from itaconic acid, methacrylic acid or acrylic acid, by dissolution of said acid comonomer in water containing at least a quantity of ammonia equal to at least 50% of the stoichiometric quantity of ammonia with respect to the acid groups present, wherein the concentration of acid comonomer in water varies within the range of 3% to 50% by weight, preferably from 5 to 30% by weight, with respect to the total weight of the aqueous solution;
ii) feeding acrylonitrile or a mixture of acrylonitrile and a neutral vinyl comonomer into the reactor, the acrylonitrile/neutral vinyl comonomer being present in a weight ratio ranging from 95:5 to 99:1, the aqueous solution of ammonium salt of the acid comonomer prepared in step i), the polymerization solvent, a radical initiator, such as, for example, 2-2'-azobisisobutyronitrile (AIBN) and a chain-transfer agent, such as, for example, dodecylmercaptan or octylmercaptan, wherein said acrylonitrile is partly unreacted acrylonitrile, purified, recovered and recycled according to steps a-h);
iii) keeping the mixture thus obtained under stirring at a temperature ranging from 60°C to 80°C, for a time ranging from 10 to 20 hours, preferably from 12 to 15 hours;
iv) discharging the contents of the reactor according to step (a);
v) feeding the mixture thus obtained to a thin-film evaporation system (TFE) operating at a temperature ranging from 40 to 80°C, and at a pressure ranging from 10 to 30 mbar abs according to step (b);
vi) collecting a mixture of acrylonitrile, water and polymerization solvent from the head of the TFE, said mixture being sent to step (c);
vii) collecting a polymer solution in polymerization solvent from the bottom of the TFE, said solution being optionally diluted with fresh polymerization solvent to reach a concentration ranging from 15 to 25% by weight, preferably from 18 to 22% by weight, with respect to the total weight of the solution, obtaining a homogeneous spinning solution;
viii) feeding the homogeneous spinning solution obtained at the end of step vii) to a spinning step or to a storage tank.

3. The process according to one or more of the previous claims, wherein the polymerization solvent is selected from dimethylformamide (DMF), dimethyl sulfoxide (DMSO), aqueous solution of zinc chloride (ZnCl₂) and an aqueous solution of sodium thiocyanate (NaSCN), and is preferably dimethyl sulfoxide (DMSO) possibly in the presence of water.

4. The process according to one or more of the previous claims, wherein copolymers are obtained starting from acrylonitrile in a quantity ranging from 95 to 99.5% by weight with respect to the total weight of the polymer and one or more co-monomers in a quantity of 0.5 to 5% by weight with respect to the total weight of the polymer.

5. The process according to one or more of the previous claims, wherein the co-monomers are molecules bearing one or more acid groups such as acrylic acid, itaconic acid, sulfonated styrenes and analogues and optionally neutral vinyl molecules such as methyl acrylate, methyl methacrylate, vinyl acetate, acrylamide and analogues.

6. The process according to one or more of the previous claims, wherein the polymers are high-molecular weight polymers, with an average numerical molecular weight ranging from 100,000 to 300,000 Da.

7. The process according to claim 2, wherein in step i), a neutral vinyl comonomer is present selected from methyl acrylate or vinyl acetate.

8. The process according to claim 2, wherein in step ii) for feeding to the reactor, 90-150 parts by weight, preferably 100 parts by weight, of acrylonitrile or a mixture of acrylonitrile and a neutral vinyl comonomer are preferably fed, the two comonomers acrylonitrile/neutral vinyl comonomer being present in a weight ratio ranging from 95:5 to 99: 1; 2-15 parts by weight, more preferably 10 parts by weight, of aqueous solution of ammonium salt of the acid comonomer prepared in step i); 300-500 parts by weight of polymerization solvent; 0.2-0.5 parts by weight of 2-2'-azobisisobutyronitrile AIBN and 0.05-0.15 parts by weight of dodecylmercaptan or octylmercaptan.

9. The process according to any of the previous claims, wherein the quantity of unreacted acrylonitrile, purified, recovered and recycled to the reactor ranges from 5 to 15% by weight with respect to the total weight of acrylonitrile fed to the reactor.

10. The process according to any of the previous claims from 2 to 9, wherein in step iii) for keeping the mixture obtained in step ii) under stirring, the temperature ranges from 65 to 75°C, for a time ranging from 10 to 20 hours, preferably from 12 to 15 hours.

## Patentansprüche

1. Verfahren zur Rückgewinnung und Rückführung von nicht umgesetztem Monomer in einem einstufigen Verfahren zur Herstellung eines Kohlenstofffaser-Vorläufers, das die folgenden Schritte umfasst:
(a) Ablassen eines Reaktionsgemischs, das Acrylnitrilpolymere oder - copolymere, die hauptsächlich aus Acrylnitril und einem oder mehreren Comonomeren, ausgewählt aus Vinylmolekülen, die eine oder mehrere Säuregruppen tragen, und gegebenenfalls neutralen Vinylmolekülen bestehen, Wasser, Polymerisationslösungsmittel, nicht umgesetzte Monomere und mögliche Reaktionsnebenprodukte umfasst, aus einem Polymerisationsreaktor in einen Tank, der auf einer Temperatur im Bereich von 35 °C bis 60 °C gehalten wird, um die Polymerisationsreaktion zu verlangsamen oder zu stoppen;
(b) Einspeisen des in Schritt (a) erhaltenen Gemischs in ein Dünnschichtverdampfungssystem (TFE), das bei einer Temperatur im Bereich von 40 °C bis 80°C und einem Druck im Bereich von 10 bis 30 mbar abs. arbeitet:
(c) Auffangen eines Gemischs aus Acrylnitril, Wasser und Polymerisationslösungsmittel am Kopf des TFE;
(d) Einspeisen des Gemischs aus Acrylnitril, Wasser und Polymerisationslösungsmittel, das am Kopf des TFE in Schritt c) bei einer Temperatur im Bereich von 60 °C bis 85 °C, vorzugsweise 70 bis 80 °C, und bei einem Druck im Bereich von 10 bis 30 mbar, vorzugsweise 15 bis 25 mbar, aufgefangen wurde, in einen ersten Kondensator, der auf eine Temperatur von 30 bis 45 °C, vorzugsweise 36 bis 42 °C, gekühlt wird, wobei eine erste flüssige Phase und eine erste Dampfphase erhalten werden;
(e) Einspeisen der ersten Dampfphase, die aus dem ersten Kondensator austritt, in einen zweiten Kondensator, der auf eine Temperatur von 12 bis 25 °C, vorzugsweise 12 bis 20 °C, gekühlt wird, wobei eine zweite flüssige Phase und eine zweite Dampfphase erhalten werden;
(f) Einspeisen der zweiten Dampfphase, die aus dem zweiten Kondensator austritt, in einen dritten Kondensator, der auf eine Temperatur im Bereich von -10 bis 10 °C, vorzugsweise von -5 bis 0 °C, gekühlt wird, wobei eine dritte flüssige Phase und eine dritte Dampfphase erhalten werden
(g) Vereinigen der drei in den vorhergehenden Schritten d) - f) erhaltenen flüssigen Phasen, wobei eine vierte flüssige Phase erhalten wird, die das Polymerisationslösungsmittel in einer Menge von 70 bis 75 Gew.-%, Acrylnitril in einer Menge von 24 bis 29 Gew.-% und Wasser in einer Menge von etwa 1 Gew.-% umfasst, wobei die Prozentsätze bezogen auf das Gesamtgewicht der vierten flüssigen Phase angegeben sind, wobei die vierte flüssige Phase dann in eine Destillationskolonne eingespeist wird, die unter Vakuum bei einem Druck von 300 bis 500 mbar arbeitet und auf einer Temperatur von 160 °C oder weniger gehalten wird;
(h) Auffangen einer vierten Dampfphase am Kopf der Destillationskolonne, die in eine Reinigungskolonne eingespeist wird, die bei einem reduzierten Druck im Bereich von 400 bis 600 mbar arbeitet und auf einer Temperatur von weniger als 70 °C gehalten wird, und Rückgewinnen von reinem Acrylnitril am Boden der Destillationskolonne, das in den Polymerisationsreaktor zurückgeführt wird.

2. Verfahren nach Anspruch 1, wobei das einstufige Verfahren zur Herstellung eines Kohlenstofffaser-Vorläufers die folgenden Schritte umfasst:
i) Herstellen einer Ammoniumsalzlösung eines sauren Comonomers, ausgewählt aus Itaconsäure, Methacrylsäure oder Acrylsäure, durch Auflösen des sauren Comonomers in Wasser, das mindestens eine Ammoniakmenge enthält, die mindestens 50 % der stöchiometrischen Ammoniakmenge, bezogen auf die vorhandenen Säuregruppen, entspricht, wobei die Konzentration des sauren Comonomers in Wasser im Bereich von 3 bis 50 Gew.-%, vorzugsweise von 5 bis 30 Gew.-%, bezogen auf das Gesamtgewicht der wässrigen Lösung, schwankt;
ii) Einspeisen von Acrylnitril oder eines Gemischs aus Acrylnitril und einem neutralen Vinylcomonomer in den Reaktor, wobei das Acrylnitril/neutrale Vinylcomonomer in einem Gewichtsverhältnis von 95:5 bis 99:1, die wässrige Lösung des Ammoniumsalzes des in Schritt i) hergestellten sauren Comonomers, des Polymerisationslösungsmittels, eines Radikalinitiators, wie z. B. 2-2'-Azobisisobutyronitril (AIBN) und eines Kettenübertragungsmittels, wie z. B. Dodecylmercaptan oder Octylmercaptan vorhanden ist, wobei das Acrylnitril teilweise nicht umgesetztes Acrylnitril ist, das gereinigt, zurückgewonnen und gemäß den Schritten a-h) wiederverwendet wird;
iii) Halten des so erhaltenen Gemischs unter Rühren bei einer Temperatur von 60 °C bis 80 °C über einen Zeitraum von 10 bis 20 Stunden, vorzugsweise von 12 bis 15 Stunden;
iv) Entleeren des Inhalts des Reaktors gemäß Schritt (a);
v) Einspeisen des so erhaltenen Gemischs in ein Dünnschichtverdampfungssystem (TFE), das bei einer Temperatur zwischen 40 und 80 °C und einem Druck zwischen 10 und 30 mbar abs. gemäß Schritt (b) arbeitet;
vi) Auffangen eines Gemischs aus Acrylnitril, Wasser und Polymerisationslösungsmittel am Kopf des TFE, wobei dieses Gemisch zu Schritt (c) geleitet wird;
vii) Auffangen einer Polymerlösung in Polymerisationslösungsmittel vom Boden des TFE, wobei die Lösung gegebenenfalls mit frischem Polymerisationslösungsmittel verdünnt wird, um eine Konzentration im Bereich von 15 bis 25 Gew.-%, vorzugsweise von 18 bis 22 Gew.-%, bezogen auf das Gesamtgewicht der Lösung zu erreichen, wodurch eine homogene Spinnlösung erhalten wird;
viii) Einspeisen der am Ende von Schritt vii) erhaltenen homogenen Spinnlösung in einen Spinnschritt oder in einen Lagertank.

3. Verfahren nach einem oder mehreren der vorstehenden Ansprüche, wobei das Polymerisationslösungsmittel ausgewählt ist aus Dimethylformamid (DMF), Dimethylsulfoxyd (DMSO), wässriger Lösung von Zinkchlorid (ZnCl₂) und einer wässrigen Lösung von Natriumthiocyanat (NaSCN), und vorzugsweise Dimethylsulfoxyd (DMSO) ist, möglicherweise in Gegenwart von Wasser.

4. Verfahren nach einem oder mehreren der vorstehenden Ansprüche, wobei Copolymere aus Acrylonitril in einer Menge im Bereich von 95 bis 99,5 Gew.-%, bezogen auf das Gesamtgewicht des Polymers, und einem oder mehreren Comonomeren in einer Menge von 0,5 bis 5 Gew.-%, bezogen auf das Gesamtgewicht des Polymers, erhalten werden.

5. Verfahren nach einem oder mehreren der vorstehenden Ansprüche, wobei die Comonomere Moleküle sind, die eine oder mehrere Säuregruppen tragen, wie Acrylsäure, Itaconsäure, sulfonierte Styrole und Analoge und gegebenenfalls neutrale Vinylmoleküle, wie Methylacrylat, Methylmethacrylat, Vinylacetat, Acrylamid und Analoge.

6. Verfahren nach einem oder mehreren der vorstehenden Ansprüche, wobei die Polymere Polymere einem hohen Molekulargewicht, mit einem durchschnittlichen numerischen Molekulargewicht im Bereich von 100.000 bis 300.000 Da sind.

7. Verfahren nach Anspruch 2, wobei in Schritt i) ein neutrales Vinylcomonomer vorhanden ist, das aus Methylacrylat oder Vinylacetat ausgewählt ist.

8. Verfahren nach Anspruch 2, wobei in Schritt ii) zum Einspeisen in den Reaktor 90 bis 150 Gew.-Teile, vorzugsweise 100 Gew.-Teile, vorzugsweise Acrylnitril oder ein Gemisch aus Acrylnitril und einem neutralen Vinylcomonomer eingespeist werden, wobei die beiden Comonomere Acrylnitril/neutrales Vinylcomonomer in einem Gewichtsverhältnis im Bereich von 95:5 bis 99:1 vorhanden sind; 2 bis 15 Gewichtsteile, noch bevorzugter 10 Gewichtsteile, einer wässrigen Lösung des Ammoniumsalzes des in Schritt i) hergestellten sauren Comonomers; 300 bis 500 Gewichtsteile Polymerisationslösungsmittel; 0,2 bis 0,5 Gew.-Teile 2-2'-Azobisisobutyronitril AIBN und 0,05 bis 0,15 Gew.-Teile Dodecylmercaptan oder Octylmercaptan.

9. Verfahren nach einem der vorstehenden Ansprüche, wobei die Menge an nicht umgesetztem Acrylnitril, das gereinigt, zurückgewonnen und in den Reaktor zurückgeführt wird, im Bereich von 5 bis 15 Gew.-%, bezogen auf das Gesamtgewicht des in den Reaktor eingespeisten Acrylnitrils, liegt.

10. Verfahren nach einem der vorstehenden Ansprüche 2 bis 9, wobei in Schritt iii), um das in Schritt ii) erhaltene Gemisch unter Rühren zu halten, die Temperatur im Bereich von 65 bis 75 °C liegt, und zwar für eine Zeitspanne im Bereich von 10 bis 20 Stunden, vorzugsweise von 12 bis 15 Stunden.

## Revendications

1. Procédé de récupération et de recyclage du monomère non réagi dans un procédé en une seule étape pour la production d'un précurseur de fibre de carbone, comprenant les étapes suivantes :
(a) décharger un mélange réactionnel comprenant des polymères ou copolymères d'acrylonitrile constitués principalement d'acrylonitrile et d'un ou plusieurs comonomères choisis parmi des molécules de vinyle portant un ou plusieurs groupes acides et éventuellement des molécules de vinyle neutres, de l'eau, un solvant de polymérisation, des monomères n'ayant pas réagi et d'éventuels sous-produits de réaction, d'un réacteur de polymérisation dans un réservoir maintenu à une température comprise entre 35 °C et 60 °C afin de ralentir ou d'arrêter la réaction de polymérisation ;
(b) introduire le mélange obtenu à l'étape (a) dans un système d'évaporation en couche mince (TFE) fonctionnant à une température comprise entre 40 °C et 80 °C et à une pression comprise entre 10 et 30 mbar abs :
(c) recueillir un mélange d'acrylonitrile, d'eau et de solvant de polymérisation dans la tête du TFE ;
(d) introduire le mélange d'acrylonitrile, d'eau et de solvant de polymérisation, recueilli dans la tête du TFE à l'étape c) à une température comprise entre 60 et 85 °C, de préférence entre 70 et 80 °C, et à une pression comprise entre 10 et 30 mbar, de préférence entre 15 et 25 mbar, dans un premier condenseur refroidi à une température de 30 à 45 °C, de préférence entre 36 et 42 °C, afin d'obtenir une première phase liquide et une première phase de vapeur;
(e) envoyer la première phase de vapeur, sortant dudit premier condenseur, dans un second condenseur refroidi à une température de 12-25 °C, de préférence 12-20 °C, pour obtenir une seconde phase liquide et une seconde phase de vapeur ;
(f) introduire la deuxième phase de vapeur, sortant dudit deuxième condenseur, dans un troisième condenseur refroidi à une température comprise entre -10 et 10 °C, de préférence entre -5 et 0 °C, afin d'obtenir une troisième phase liquide et une troisième phase de vapeur
(g) combiner les trois phases liquides obtenues dans les étapes d)-f) précédentes, en obtenant une quatrième phase liquide comprenant le solvant de polymérisation en une quantité allant de 70 à 75% en poids, l'acrylonitrile en une quantité allant de 24 à 29 % en poids et l'eau en une quantité égale à environ 1 % en poids, ces pourcentages étant indiqués par rapport au poids total de la quatrième phase liquide, cette quatrième phase liquide étant ensuite introduite dans une colonne de distillation fonctionnant sous vide à une pression allant de 300 à 500 mbar et maintenue à une température inférieure ou égale à 160 °C ;
(h) collecte d'une quatrième phase de vapeur en tête de la colonne de distillation, qui est acheminée vers une colonne de purification fonctionnant à une pression réduite comprise entre 400 et 600 mbar et maintenue à une température inférieure à 70 °C, et récupération d'acrylonitrile pur en bas de la colonne de distillation, qui est recyclé dans le réacteur de polymérisation.

2. Procédé selon la revendication 1, dans lequel le procédé en une seule étape pour la production d'un précurseur de fibre de carbone comprend les étapes suivantes :
i) préparer une solution de sel d'ammonium d'un comonomère acide choisi parmi l'acide itaconique, l'acide méthacrylique ou l'acide acrylique, par dissolution dudit comonomère acide dans de l'eau contenant au moins une quantité d'ammoniaque égale à au moins 50 % de la quantité stoechiométrique d'ammoniaque par rapport aux groupes acides présents, la concentration de comonomère acide dans l'eau variant entre 3 % et 50 % en poids, de préférence entre 5 et 30 % en poids, par rapport au poids total de la solution aqueuse ;
ii) introduire dans le réacteur de l'acrylonitrile ou un mélange d'acrylonitrile et un comonomère vinylique neutre, l'acrylonitrile/le comonomère vinylique neutre étant présent dans un rapport en poids allant de 95:5 à 99 :1, la solution aqueuse de sel d'ammonium du comonomère acide préparé à l'étape i), le solvant de polymérisation, un initiateur de radicaux, tel que, par exemple, le 2-2'-azobisisobutyronitrile (AIBN) et un agent de transfert de chaîne, tel que, par exemple, le dodécylmercaptan ou l'octylmercaptan, dans lequel ledit acrylonitrile est en partie de l'acrylonitrile n'ayant pas réagi, purifié, récupéré et recyclé conformément aux étapes a-h) ;
iii) maintenir le mélange ainsi obtenu sous agitation à une température allant de 60 °C à 80 °C, pendant une durée allant de 10 à 20 heures, de préférence de 12 à 15 heures ;
iv) décharger le contenu du réacteur conformément à l'étape (a) ;
v) introduire le mélange ainsi obtenu dans un système d'évaporation en couche mince (TFE) fonctionnant à une température comprise entre 40 et 80 °C et à une pression comprise entre 10 et 30 mbar abs, conformément à l'étape (b) ;
vi) recueillir un mélange d'acrylonitrile, d'eau et de solvant de polymérisation dans la tête du TFE, ce mélange étant envoyé à l'étape (c) ;
vii) recueillir une solution de polymère dans le solvant de polymérisation au fond du TFE, ladite solution étant éventuellement diluée avec du solvant de polymérisation frais pour atteindre une concentration comprise entre 15 et 25 % en poids, de préférence entre 18 et 22 % en poids, par rapport au poids total de la solution, afin d'obtenir une solution de filage homogène ;
viii) acheminer la solution de filage homogène obtenue à la fin de l'étape vii) vers une étape de filage ou vers un réservoir de stockage.

3. Procédé selon une ou plusieurs des revendications précédentes, dans lequel le solvant de polymérisation est choisi parmi le diméthylformamide (DMF), le sulfoxyde de diméthyle (DMSO), une solution aqueuse de chlorure de zinc (ZnCl₂) et une solution aqueuse de thiocyanate de sodium (NaSCN), et est de préférence le sulfoxyde de diméthyle (DMSO) éventuellement en présence d'eau.

4. Procédé selon une ou plusieurs des revendications précédentes, dans lequel les copolymères sont obtenus à partir d'acrylonitrile en une quantité allant de 95 à 99,5 % en poids par rapport au poids total du polymère et d'un ou plusieurs comonomères en une quantité allant de 0,5 à 5 % en poids par rapport au poids total du polymère.

5. Procédé selon une ou plusieurs des revendications précédentes, dans lequel les comonomères sont des molécules portant un ou plusieurs groupes acides tels que l'acide acrylique, l'acide itaconique, les styrènes sulfonés et analogues et éventuellement des molécules vinyliques neutres telles que l'acrylate de méthyle, le méthacrylate de méthyle, l'acétate de vinyle, l'acrylamide et analogues.

6. Procédé selon une ou plusieurs des revendications précédentes, dans lequel les polymères sont des polymères de poids moléculaire élevé, avec un poids moléculaire numérique moyen compris entre 100 000 et 300 000 Da.

7. Procédé selon la revendication 2, dans lequel à l'étape i), un comonomère vinylique neutre est présent, choisi parmi l'acrylate de méthyle ou l'acétate de vinyle.

8. Procédé selon la revendication 2, dans lequel, à l'étape ii) d'alimentation du réacteur, on introduit de préférence 90-150 parties en poids, de préférence 100 parties en poids, d'acrylonitrile ou d'un mélange d'acrylonitrile et d'un comonomère vinylique neutre, les deux comonomères acrylonitrile/comonomère vinylique neutre étant présents dans un rapport en poids allant de 95:5 à 99:1 ; 2-15 parties en poids, de préférence 10 parties en poids, de solution aqueuse de sel d'ammonium du comonomère acide préparé à l'étape i) ; 300-500 parties en poids de solvant de polymérisation ; 0.2-0,5 parties en poids de 2-2'-azobisisobutyronitrile AIBN et 0,05-0,15 parties en poids de dodécylmercaptan ou d'octylmercaptan.

9. Procédé selon l'une des revendications précédentes, dans lequel la quantité d'acrylonitrile n'ayant pas réagi, purifiée, récupérée et recyclée dans le réacteur est comprise entre 5 et 15 % en poids par rapport au poids total d'acrylonitrile introduit dans le réacteur.

10. Procédé selon l'une quelconque des revendications précédentes de 2 à 9, dans lequel, à l'étape iii) de maintien sous agitation du mélange obtenu à l'étape ii), la température est comprise entre 65 et 75 °C, pendant une durée allant de 10 à 20 heures, de préférence de 12 à 15 heures.
